(19) Europäisches Patentamt
European Patent Office
Office européen des brevets

(11) Numéro de publication : **0 434 513 B1**

# (12) FASCICULE DE BREVET EUROPEEN

(45) Date de publication du fascicule du brevet : **05.07.95 Bulletin 95/27**

(21) Numéro de dépôt : **90403574.8**

(22) Date de dépôt : **13.12.90**

(51) Int. Cl.[6] : **G21C 19/46,** C22B 60/02, C22B 3/26, C01G 56/00, C01G 57/00

## (54) Procédé pour séparer au moyen d'éthers-couronnes le plutonium de l'uranium et des produits de fission, dans les premiers stades du retraitement des combustibles nucléaires irradiés.

(30) Priorité : **15.12.89 FR 8916636**
**15.12.89 FR 8916638**

(43) Date de publication de la demande : **26.06.91 Bulletin 91/26**

(45) Mention de la délivrance du brevet : **05.07.95 Bulletin 95/27**

(84) Etats contractants désignés : **BE DE ES FR GB IT SE**

(56) Documents cités :
**US-A- 4 186 175**
**CHEMICAL ABSTRACTS, vol. 111, no. 6, 1989, page 445, abrégé no. 46006v,Columbus, Ohio, US; T. DELLOYE et al.: "Liquid-liquid extraction and transport through a water chloroform water liquid membrane of alkaline earth nitrates by dicylcohexano 18-crown-6 (DC18-6)", & NEW J. CHEM. 1989, 13(2), 139-44**
**CHEMICAL ABSTRACTS, vol. 107, no. 12, 1987, pages 469-470, abrégé no. 103766m,Columbus, Ohio, US; W. WANG et al.: "Extraction equilibrium and crystal structure of hydronium-uranium(IV)-dicyclohexano-18-crown-6 isomer A complex", & RADIOCHIM. ACTA 1986, 40(4), 199-202**
**CHEMICAL ABSTRACTS, vol. 107, no. 4, 1987, page 421, abrégé no. 29787a,Columbus, Ohio, US; W.J. WANG et al.: "Further study of extraction equilibrium of uranium(VI) with dicyclohexano-18-crown-6 and its application to separating uranium and thorium", & J.RADIOANAL. NUCL. CHEM. 1987, 110(1), 227-33**
**CHEMICAL ABSTRACTS, vol. 104, no. 20, 1986, page 445, résumé no. 175397c,Columbus, Ohio, US; W.J. WANG et al.: "Extraction equilibrium of uranium(VI) with dicyclohexano-18-crown-6 and its application for separating uranium and thorium", & J. RADIOANAL. NUCL. CHEM. 1986, 98(1), 11-16**

(73) Titulaire : **COGEMA COMPAGNIE GENERALE DES MATIERES NUCLEAIRES**
**2, rue Paul Dautier**
**B.P. 4**
**F-78141 Velizy-Villacoublay (FR)**

(72) Inventeur : **Lemaire, Marc**
**23 rue Château Gaillard**
**F-69100 Villeurbanne (FR)**
Inventeur : **Guy, Alain**
**1 rue Urgons**
**F-77135 Pontcarre (FR)**
Inventeur : **Foos, Jacques**
**33 rue Louis Scocard**
**F-91400 Orsay (FR)**
Inventeur : **Chomel, Rodolphe**
**27Bis, Avenue de Champlin**
**F-84100 Orange (FR)**
Inventeur : **Doutreluigne, Pierre**
**15 rue de la Cerisaie**
**F-30200 Bagnols sur Ceze (FR)**
Inventeur : **Moutarde, Thierry Chez Louis Perez**
**Route d'Uchaux**
**chemin Vicinal 04**
**F-84420 Piolenc (FR)**
Inventeur : **Guyon, Vincent**
**235 rue Saint Martin**
**F-75003 Paris (FR)**
Inventeur : **Le Roy, Henri**
**Résidence du Val l'Abbé**
**F-50120 Equeurdreville (FR)**

(74) Mandataire : **Des Termes, Monique et al**
**Société Brevatome**
**25, rue de Ponthieu**
**F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).



Jouve, 18, rue Saint-Denis, 75001 PARIS

(56) Documents cités :

**CHEMICAL ABSTRACTS, vol. 102, no. 14, 1984, abrégé no. 120874j, Columbus, Ohio, US; V.V. YAKSHIN et al.: "Reactivity of diastereomers of dicyclohexyl-18-crown-6 in the extraction of inorganic acids and metal salts"; & DOKL. AKAD. NAUK SSSR, 279(2), 407-10**

**CHEMICAL ABSTRACTS, vol. 102, no. 24, 1985, abrégé no. 14303z, Columbus, Ohio,US; V.V. YAKSHIN et al.: "Extraction of lead from solutions of complex composition using dicyclohexyl-18-crown-6", & ZH. ANAL. KHIM. 40(3),469-72**

**CHEMICAL ABSTRACTS, vol. 109, no. 22, 1988, abrégé no. 198431b, Columbus, Ohio,US; J.F. LORET et al.: "Liquid-lipophilic gel extraction of precious metals", & SOLVENT EXTR. ION EXCH., 6(4), 585-603**

**CHEMICAL ABSTRACTS, vol. 89, no. 2, 1978, abrégé no. 16088h, Columbus, Ohio,US; W.H. DELPHIN et al.: "Effects of crown ethers on ion exchange behavior of alkali metals", & ANAL. CHEM., 50(7), 843-8**

## Description

L'invention a pour objet un procédé pour séparer le plutonium de l'uranium et des produits de fission, présents dans une solution aqueuse obtenue dans les premiers stades du retraitement des éléments combustibles nucléaires irradiés.

De façon plus précise, elle concerne un procédé dans lequel on sépare le plutonium de l'uranium et des produits de fission en utilisant un solvant organique comprenant au moins un éther-couronne.

Depuis plusieurs années la technique la plus largement utilisée pour réaliser le retraitement des combustibles nucléaires irradiés consiste à dissoudre le combustible dans une solution nitrique, à mettre ensuite la solution aqueuse nitrique obtenue en contact avec un solvant organique pour extraire dans celui-ci l'uranium et le plutonium et les séparer de la majorité des produits de fission, à réextraire l'uranium et le plutonium dans une phase aqueuse et à séparer l'uranium et le plutonium présents dans cette phase aqueuse au moyen d'un solvant organique. Le solvant organique utilisé est généralement le phosphate de tributyle.

Bien que ce solvant donne des résultats très satisfaisants, il présente l'inconvénient d'avoir une résistance aux rayonnements insuffisante car il se dégrade par radiolyse en produits tels que l'acide dibutylphosphorique qui sont gênants pour l'extraction. De plus, lorsqu'on sépare l'uranium du plutonium en utilisant ce solvant, il est nécessaire d'effectuer préalablement une étape de réduction du plutonium afin de maintenir celui-ci en solution aqueuse et d'extraire l'uranium (VI) dans le phosphate de tributyle. Ceci nécessite des étapes complémentaires et l'introduction d'agents réducteurs et de stabilisants qui sont gênants pour la suite du traitement.

Aussi, de nombreuses recherches ont été effectuées sur d'autres solvants susceptibles d'être utilisés afin d'éviter ces inconvénients.

Parmi les solvants utilisables, les éthers-couronnes constituent un groupe très intéressant car ils ont une meilleure affinité pour le plutonium que le phosphate de tributyle, ils permettent de réaliser la séparation uranium-plutonium sans qu'il soit nécessaire d'effectuer une réduction du plutonium et ils ont une meilleure tenue sous irradiation que le phosphate de tributyle puisque l'on n'observe aucune modification de l'éther-couronne après irradiation pendant 140h à un débit de dose de 120 krad/h.

La présente invention a précisément pour objet un procédé pour séparer le plutonium de l'uranium et des produits de fission (PF) au moyen d'éthers-couronnes, qui permet d'obtenir un meilleur rendement d'extraction du plutonium, tout en présentant l'avantage de pouvoir être mis en oeuvre dans des installations classiques telles que celles utilisées actuellement dans les usines de retraitement de combustibles nucléaires irradiés.

Selon l'invention, le procédé pour séparer le plutonium (IV) de l'uranium et des produits de fission présents dans une solution aqueuse A0, obtenue lors du retraitement des éléments combustibles nucléaires irradiés et contenant pratiquement la totalité du plutonium provenant de ces éléments, comprend les étapes successives suivantes :

1°) mise en contact de cette solution aqueuse A0 avec une solution organique $O_0$ comprenant au moins un éther-couronne de façon à obtenir une solution organique $O_1$ contenant de l'uranium et du plutonium et une solution aqueuse $A_1$ contenant des produits de fission,

2°) réextraction de l'uranium extrait dans la solution organique $O_1$ par mise en contact de cette solution avec une solution aqueuse $A_4$ constituée par de l'eau ou par une solution aqueuse nitrique de façon à obtenir une solution aqueuse $A_5$ contenant l'uranium et une solution organique $O_3$ contenant du plutonium, et

3°) récupération du plutonium présent dans la solution organique $O_3$ par mise en contact de cette solution avec une solution aqueuse $A_6$ d'un acide hydrophile.

Le procédé tel que décrit ci-dessus permet ainsi d'obtenir la séparation U/Pu/PF sans cycle de valence avec une sélectivité accrue, par simple extraction suivie d'un lavage et d'une réextraction. De plus, il ne nécessite pas de modifications majeures de la technologie existante.

En effet, avec cette nouvelle solution organique, l'essentiel de l'équipement actuel utilisé pour le retraitement des combustibles nucléaires irradiés peut être conservé avec des modifications mineures.

Dans la première étape de ce procédé, on extrait l'uranium et le plutonium dans la solution organique $O_0$ par mise en contact de la solution aqueuse $A_0$ contenant l'uranium, le plutonium et les produits de fission avec cette solution organique qui comprend l'éther-couronne, alors que les produits de fission restent en majeure partie dans la solution aqueuse.

Généralement, la solution aqueuse $A_0$ est une solution nitrique ayant une concentration en acide nitrique de 0,8 à 5 mol/l, par exemple de 4,5 mol/l.

Dans la deuxième étape, on réextrait l'uranium par de l'eau ou par une solution aqueuse nitrique afin de ne conserver dans la solution organique que le plutonium.

Dans cette deuxième étape, on peut utiliser en particulier une solution nitrique ayant une concentration en acide nitrique inférieure à 3 mol/l, par exemple une solution aqueuse ayant une concentration en $HNO_3$ de

1 mol/l.

Dans la dernière étape de réextraction du plutonium, on utilise une solution aqueuse d'un acide hydrophile susceptible de former un complexe fort avec Pu.

Les acides hydrophiles susceptibles d'être utilisés sont par exemple $H_2SO_4$, $H_3PO_4$, HCl et HF.

De préférence, on utilise, pour cette étape de réextraction du plutonium, une solution aqueuse contenant 0,05 à 2 mol/l d'acide sulfurique.

De préférence encore, on opère avec un excès d'ion sulfate par rapport à la quantité de Pu à réextraire, par exemple un excès tel que le rapport de la concentration en $SO_4^{2-}$ sur la concentration en Pu soit supérieur ou égal à 12. A titre d'exemple, on peut utiliser une solution aqueuse à 0,5 mol/l de $H_2SO_4$.

Après réextraction du plutonium, on peut soumettre la solution organique $O_4$, obtenue après cette étape, à un traitement de purification en vue de la réutiliser pour la première étape d'extraction du plutonium.

Ce traitement peut consister en un lavage par une solution aqueuse d'acide sulfurique ayant une concentration en $H_2SO_4$ supérieure à celle utilisée dans l'étape de réextraction du Pu, par exemple une solution à 3 mol/l de $H_2SO_4$.

Selon une première variante de réalisation de l'étape de réextraction du Pu, applicable lorsque la solution $O_3$ comprend un diluant chloré tel que le chloroforme, on réalise la dernière étape de récupération du plutonium présent dans la solution organique $O_3$ après réextraction de l'uranium, en mettant en contact cette solution avec de l'eau ou une solution aqueuse de faible acidité.

Dans ce cas, on réalise l'étape de réextraction de l'uranium par une solution aqueuse nitrique.

Selon une deuxième variante de réalisation de l'étape de réextraction du Pu, on récupère le plutonium présent dans la solution organique $O_3$ par dilution de cette solution $O_3$ au moyen d'un solvant et mise en contact de la solution diluée obtenue avec une solution aqueuse $A_6$ constituée par de l'eau ou une solution aqueuse de faible acidité.

Selon une troisième variante de réalisation de l'étape de réextraction du Pu, on réalise cette étape de récupération du plutonium présent dans la solution organique $O_3$ par mise en contact de la solution $O_3$ avec une solution aqueuse d'un agent réducteur tel que le nitrate d'hydroxylamine.

Dans le procédé de l'invention, on peut utiliser tous les types d'éthers-couronnes, par exemple ceux décrits dans la publication de E. Weber "Crown Compounds - Properties and Practice", p. 34-82. Ainsi, on peut utiliser les éthers-couronnes répondant aux formules :

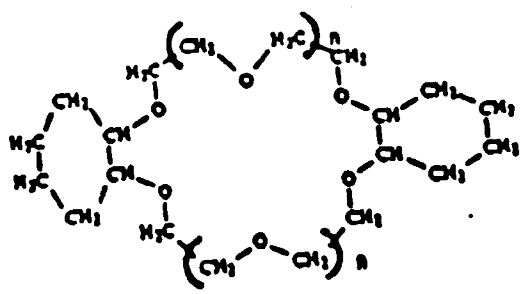

(I)

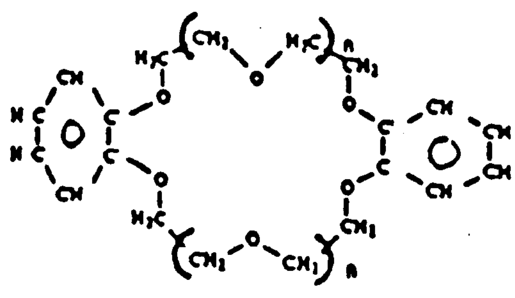

(II)

dans lesquelles n est égal à 0, ou est un nombre entier allant de 1 à 4.

A titre d'exemples de tels éthers-couronnes, on peut citer ceux de formule (I) pour lesquels n = 1 (DCH 18C6) ou n = 2 (DCH 24C8), et ceux de formule (II) pour lesquels n = 1 (DB 18C6) et n = 2.

On peut encore utiliser les éthers-couronnes répondant aux formules suivantes :

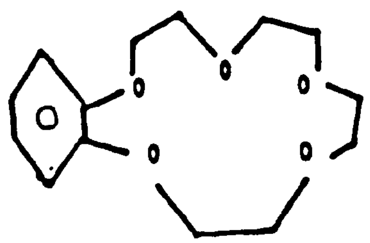 (III) 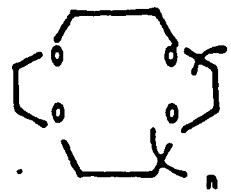 (IV)

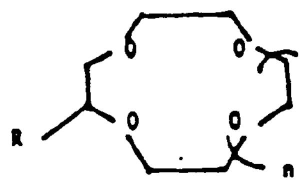 (V)

dans lesquelles n = 0, 1 ou 2.

De préférence, on utilise l'éther-couronne DCH18C6, c'est-à-dire celui répondant à la formule (I) avec n = 1, soit sous la forme d'un mélange de ses isomères, soit sous la forme de son isomère cis-syn-cis qui présente un meilleur coefficient d'extraction du plutonium, soit encore sous la forme de son isomère cis-anti-cis qui permet d'obtenir des solutions organiques plus concentrées en plutonium.

En effet, l'éther-couronne répondant à la formule (I) donnée ci-dessus qui est connu sous le nom de dicyclohexano-18-crown-6 (DCH18C6), possède 5 diastéréoisomères qui ont les structures suivantes :

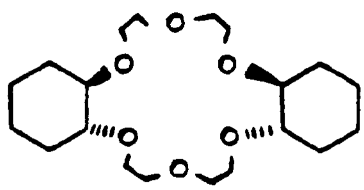

trans-syn-trans

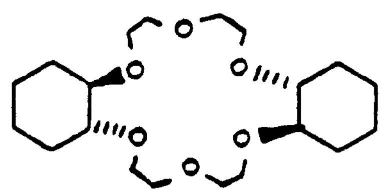

trans-anti-trans

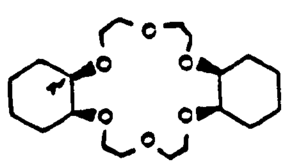

cis-syn-cis

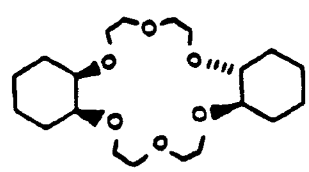

cis-trans

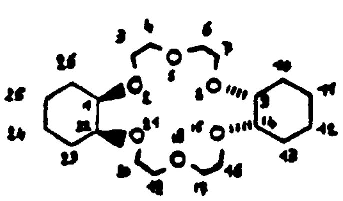

forme cristalline $B_1$: 69-70°C
forme cristalline $B_2$: 83-84°C

cis-anti-cis

L'éther-couronne de formule (I) peut être préparé par hydrogénation catalytique du dibenzo 18-crown 6; dans ce cas, on obtient un mélange d'isomères qui contient principalement les isomères cis-syn-cis et cis-anti-cis.

L'isomère cis-syn-cis peut être séparé de ce mélange par des procédés classiques tels que ceux décrits par R.M. Izatt et coll dans J. Amer. Chem. Soc., 93, 1619 (1971) et dans Inorganic Chemistry, 14, 3132 (1975) et par C.J. Pedersen dans Organic Syntheses, 52, 66. On peut aussi séparer les isomères cis-syn-cis et cis-anti-cis par un procédé consistant à :

a) dissoudre dans un solvant organique un mélange des isomères de l'éther-couronne comprenant l'isomère cis-anti-cis et l'isomère cis-syn-cis,

b) ajouter du nitrate d'uranyle à la solution obtenue dans l'étape a) en quantité telle que l'on précipite pratiquement tous les isomères de l'éther-couronne sauf l'isomère cis-syn-cis, sous la forme de complexes avec le nitrate d'uranyle,

c) séparer le précipité ainsi formé,

d) récupérer l'isomère cis-syn-cis pur restant dans la solution, et

e) récupérer l'isomère cis-anti-cis à partir du précipité séparé dans l'étape c).

L'isomère cis-syn-cis possède une solubilité dans les diluants organiques plus élevée que celles de l'isomère cis-anti-cis et du mélange d'isomères, ce qui rend possible son utilisation dans des diluants organiques comme le dodécane et le baltane ou l'utilisation d'une concentration élevée dans des diluants organiques comme le benzonitrile, le dichloréthane, le chloroforme, le trichloréthylène.

Ainsi, l'isomère cis-syn-cis est miscible totalement avec l'heptane et le dodécane alors que l'isomère cis-anti-cis n'a qu'une solubilité de 10% dans l'heptane ou le dodécane.

Les complexes formés entre l'uranium et l'isomère cis-syn-cis sont également plus solubles dans les diluants organiques que les complexes formés avec l'isomère cis-anti-cis ou avec le mélange d'isomères. On peut donc utiliser une concentration plus élevée en isomère cis-syn-cis, car il ne se forme pas de précipités lorsqu'une solution concentrée de sels d'uranium contenant du plutonium est mise en contact avec une solution concentrée de l'isomère cis-syn-cis.

A titre d'exemple, on donne ci-dessous les concentrations maximales d'isomère cis-syn-cis dans un diluant organique, et de nitrate d'uranyle dans $HNO_3$ 1N qui conduisent à un mélange biphasique liquide-liquide sans formation de précipité après 3 h à 20°C.

| Solvant | Cis-syn-cis DCH18C6 (en%) | Concentration maximale de $UO_2(NO_3)_2$ en % de U dans $HNO_3$ 1N |
|---|---|---|
| Dodécane | 10% | 12,5% |
| Toluène | 40% | 45% |
| $CHCl_3$ | 40% | 45% |
| $C_6H_5CN$ | 40% | 45% |

Dans les mêmes conditions, l'isomère cis-anti-cis et le mélange d'isomères du DCH18C6 conduisent à un précipité important de complexes d'uranium cristallisés, pour des concentrations en uranium très faibles, inférieures à 5% (P/V).

Le choix de l'isomère cis-syn-cis peut donc être intéressant car de plus les constantes d'extraction du plutonium (IV) par l'isomère cis-syn-cis sont 2 à 3 fois plus élevées que celles obtenues avec l'isomère cis-anti-cis ou le mélange d'isomères. En revanche, les constantes d'extraction de l'uranium et des produits de fission sont sensiblement les mêmes pour l'isomère cis-syn-cis, pour l'isomère cis-anti-cis et le mélange d'isomères. De ce fait, on observe des coefficients de partage et une sélectivité d'extraction beaucoup plus élevée pour le plutonium et on peut obtenir une purification plus complète et plus rapide de celui-ci.

En revanche, la solubilité dans les diluants organiques des complexes Pu-isomère cis-anti-cis est plus élevée que celle des complexes Pu-isomère cis-syn-cis. On peut donc utiliser avec l'isomère cis-anti-cis des rapports en volume phase aqueuse/phase organique plus grands tout en obtenant des résultats intéressants pour l'extraction du Pu, similaires à ceux que l'on obtient avec le mélange commercial d'isomères.

Aussi, lorsque la solution aqueuse de départ provient du premier cycle de séparation U-Pu-produits de fission, c'est-à-dire qu'elle est moins chargée en uranium que la solution provenant du stade de dissolution des combustibles, on préfère utiliser l'isomère cis-anti-cis du DCH18C6 pour obtenir en fin d'opération une solution organique plus concentrée en plutonium.

Généralement, la solution organique $O_0$ comprend un diluant organique qui peut être choisi par exemple parmi les solvants chlorés tels que $CHCl_3$, $CH_2Cl_2$, $CCl_3CH_3$, $CHCl_2CHCl_2$, $ClCH_2CH_2Cl$ et le dichlorobenzène,

l'éther, les hydrocarbures aliphatiques et aromatiques tels que l'heptane, le dodécane, le benzène et les alkylbenzènes, le nitrobenzène et le benzonitrile.

De préférence, on utilise la benzonitrile ou le dichloréthane.

La concentration en éther-couronne de la solution organique $O_0$ peut varier dans une large gamme et dépend en particulier du diluant organique et de l'isomère utilisés.

En effet, cette concentration doit être telle que l'on obtienne une solution organique homogène sans cristallisation de l'éther-couronne ou des complexes éther-couronne - U et/ou Pu.

Généralement, on utilise une concentration en éther-couronne de la solution organique $O_0$ allant de 0,5 à 40% en poids/volume.

Pour obtenir une bonne décontamination en produits de fission, il est toutefois préférable de ne pas utiliser une concentration très élevée en éther-couronne, car on a remarqué avec le DCH18C6 que le rapport Pu extrait/produits de fission extraits augmente lorsque la concentration en DCH18C6 diminue.

A titre d'exemple, avec l'isomère cis-anti-cis du DCH18C6, on peut utiliser une concentration en éther-couronne de 10% en P/V.

Selon un mode de réalisation préféré du procédé de l'invention, on réalise au moins une étape supplémentaire de lavage de la solution organique $O_1$ par une solution aqueuse $A_2$ avant de procéder à la deuxième étape de réextraction de l'uranium par la solution aqueuse $A_4$; ceci permet d'éliminer les traces de produits de fission extraits dans la première étape.

Ce lavage peut être réalisé au moyen d'une solution d'acide nitrique ayant de préférence une concentration en acide nitrique de 2 à 5 mol/l. En effet, une concentration élevée en $HNO_3$ est favorable à la réextraction des produits de fission. On peut par exemple utiliser une solution de $HNO_3$ 4,5N.

Le procédé de l'invention est généralement mis en oeuvre à la pression atmosphérique et à la température ambiante, avec des appareillages classiques permettant de réaliser les mises en contact des solutions organiques avec les solutions aqueuses.

Ainsi, on peut utiliser des appareillages assurant le mélange des deux phases aqueuse et organique puis leur séparation, par exemple des mélangeurs-décanteurs et des colonnes d'échange à co-courant ou à contre-courant comme les colonnes pulsées.

La solution aqueuse de départ A0 contenant l'uranium, le plutonium et les produits de fission est une solution obtenue aux premiers stades du retraitement des combustibles irradiés. C'est généralement une solution nitrique, par exemple la solution nitrique obtenue lors de la dissolution des combustibles ou la solution nitrique obtenue après le premier stade de séparation de l'uranium. La teneur en acide nitrique de cette solution peut varier de 0,8 à 5 mol/l. De préférence, pour favoriser l'extraction du plutonium, la teneur en acide nitrique de cette solution est ajustée à une valeur d'au moins 4 mol/l, par exemple 4,5 mol/l.

A titre d'exemple de solutions provenant de la dissolution d'éléments combustibles irradiés, on peut citer celles contenant environ 1 g/l de Pu, 200 à 400 g/l d'uranium, 600 à 1100 GBq/l de produits de fission et 0,8 à 5 mol/l de $HNO_3$.

A titre d'exemple de solutions obtenues après le premier cycle de séparation uranium-plutonium des produits de fission, on peut citer celles contenant 0,9 à 2,3 g/l de Pu, environ 1 g/l de U, 0,7 à 1,5 GBq/l de produits de fission et 1 à 5 mol/l de $HNO_3$.

Lorsque la solution aqueuse de départ provient du premier cycle de séparation de l'uranium et du plutonium des produits de fission, elle peut contenir le plutonium sous la forme de Pu(III) qui n'est pas extrait par les éthers-couronnes. Dans ce cas, on procède donc à une étape préliminaire d'oxydation de Pu(III) en Pu(IV) qui peut être réalisée au moyen de vapeurs nitreuses, ce qui correspond à la réaction suivante :

$$Pu^{3+} + NO_2 \rightarrow Pu^{4+} + NO_2^-$$

Généralement, on met en oeuvre le procédé de l'invention en faisant circuler en continu les solutions aqueuses et organiques dans une installation appropriée.

De préférence, dans chaque étape, on met en contact la solution aqueuse ($A_0$, $A_2$, $A_4$ ou $A_6$) avec la solution organique correspondante ($O_0$, $O_2$, $O_4$ ou $O_6$) en faisant circuler les deux solutions à contre-courant, et on recycle la solution aqueuse $A_3$ obtenue après l'étape de lavage avec la solution aqueuse $A_0$ à traiter.

De préférence encore, on recycle la solution aqueuse $A_5$ obtenue après l'étape de réextraction de l'uranium pour l'utiliser dans l'étape de lavage avec la solution aqueuse $A_2$.

Lorsqu'on opère en continu, les débits de solution aqueuse et de solution organique sont choisis en fonction de la concentration en plutonium de la solution aqueuse de départ et de la concentration en plutonium que l'on souhaite obtenir dans la solution organique avant réextraction du plutonium. Les rapports de débit peuvent aussi différer selon qu'il s'agit de la première étape d'extraction du plutonium, de l'étape de réextraction de l'uranium, de l'étape de lavage des produits de fission ou de l'étape de réextraction du Pu.

Généralement, dans la première étape d'extraction du Pu, le rapport: débit de la solution aqueuse (A)/débit de la solution organique (O) est situé dans la gamme allant de 0,5 à 15.

Toutefois, pour améliorer la sélectivité de l'extraction vis-à-vis du Pu, on préfère utiliser un rapport des débits A/O élevé, par exemple 12.

Pour l'étape de lavage du solvant organique en vue d'éliminer les produits de fission, le rapport des débits peut être plus faible que lors de l'extraction du Pu. A titre d'exemple, on peut utiliser des rapports de débits A/O de 2 à 4.

Pour l'étape de réextraction de l'uranium, on peut utiliser également des rapports de débits A/O plus faibles que dans la première étape d'extraction du Pu, par exemple un rapport des débit A/O de 2.

Pour la dernière étape de réextraction du plutonium, lorsqu'on effectue cette étape au moyen de $H_2SO_4$, on peut utiliser un rapport des débits A/O peu élevé afin de récupérer une solution aqueuse ayant une concentration en plutonium relativement élevée. A titre d'exemple, on peut utiliser un rapport des débits A/O de 1.

D'autres caractéristiques et avantages de l'invention apparaîtront mieux à la lecture de la description qui suit donnée bien entendu à titre illustratif et non limitatif en référence au dessin annexé, sur lequel

- la figure 1 est un diagramme illustrant de façon schématique le procédé de l'invention, et
- la figure 2 représente schématiquement une installation pour mettre en oeuvre en continu le procédé de l'invention avec l'isomère cis-anti-cis du DCH18C6.

L'exemple 1 qui suit, illustre le traitement d'une solution aqueuse obtenue après le premier cycle de séparation uranium-plutonium lors du traitement de combustibles nucléaires irradiés.

**<u>Exemple 1.</u>**

Cet exemple se réfère à la figure 1 qui illustre schématiquement les quatre étapes successives d'extraction de l'uranium et du plutonium, de lavage pour éliminer les produits de fission, de réextraction de l'uranium et de réextraction du plutonium.

Les lignes en trait plein se rapportent aux solutions organiques alors que les lignes en tirets se rapportent aux différentes solutions aqueuses.

Dans le premier stade d'extraction de l'uranium et du plutonium, on met en contact une solution aqueuse A0, par exemple une solution aqueuse nitrique contenant l'uranium, le plutonium et les produits de fission (PF) avec la solution organique $O_0$ constituée par exemple de benzonitrile contenant 25% (en P/V) de DCH18C6 du commerce, c'est-à-dire un mélange d'isomères. A la sortie du stade d'extraction, on récupère donc une solution aqueuse A1 contenant surtout les produits de fission et une solution organique $O_1$ qui a extrait l'uranium et le plutonium. Cette solution $O_1$ est soumise à un lavage par une solution $A_2$ d'acide nitrique 4N pour éliminer les produits de fission que l'on récupère ainsi dans la solution aqueuse $A_3$. La solution organique débarrassée des produits de fission $O_2$ est introduite alors au stade de réextraction de l'uranium où elle est mise en contact avec une solution $A_4$ constituée par de l'eau, ce qui permet de récupérer une solution aqueuse $A_5$ contenant l'uranium et une solution organique $O_3$ ne contenant pratiquement plus que du plutonium. Cette solution organique $O_3$ est introduite au stade de réextraction du plutonium où elle est mise en contact avec une solution $A_6$ d'acide sulfurique 0,5M, ce qui permet de récupérer une solution aqueuse $A_7$ contenant du plutonium et une solution organique $O_4$ qui peut être recyclée au stade d'extraction de l'uranium et du plutonium.

On a traité de cette façon une solution aqueuse obtenue après le premier cycle de retraitement des combustibles nucléaires irradiés, qui avait la composition suivante :

- 980 mg/l d'uranium,
- 1319 mg/l de plutonium,
- 1,27 mCi/l de produits de fission,
- 4 mol/l d'ions $H^+$.

Les résultats obtenus en traitant cette solution selon le schéma décrit ci-dessus et en mettant en contact dans chaque étape un volume de solution aqueuse avec deux volumes de la deuxième solution organique pendant une durée de 10 minutes, sont donnés dans le tableau 1 annexé.

Au vu de ces résultats, on constate que l'on extrait dans la première étape 85% de l'uranium, 99,6% du plutonium et 31% des produits de fission, la première étape de lavage permet la réextraction de 20% des produits de fission, de 34,3% de l'uranium et de seulement 0,64% du plutonium présents dans la solution initiale A0. Une réextraction de la solution organique par l'eau permet de récupérer dans la solution A3 48,2% de l'uranium ne contenant que 5% du plutonium et 4,9% des produits de fission. Une réextraction par l'acide sulfurique à 0,5 mol/l permet de récupérer dans A4 94% du plutonium de départ ne contenant que 2,5% de l'uranium et 5,6% des produits de fission de départ.

Ainsi, le procédé de l'invention permet de récupérer une solution A1 fortement enrichie en produits de fission (69%), une solution $A_5$ fortement enrichie en uranium (48%) et une solution $A_7$ contenant l'essentiel du plutonium (94%), en ne nécessitant qu'une extraction, un lavage et deux réextractions successives.

Exemple 2.

Cet exemple illustre l'utilisation de l'isomère cis-syn-cis du DCH18C6 à une concentration de 0,134 mol/l dans du chloroforme pour l'extraction du plutonium à partir d'une solution aqueuse nitrique provenant également du premier cycle de retraitement des combustibles nucléaires irradiés, qui contient

- 906mg/l d'uranium (VI)
- 1360mg/l de Pu(IV)
- 5mol/l de $HNO_3$, et
- $18,1.10^7$mBq/l (4,88 mCi/l) de produits de fission.

Dans ce cas, pour réaliser la première étape d'extraction, on met en contact 15 ml de la solution aqueuse avec 30 ml du solvant organique d'extraction, sous agitation, pendant 10 min. On sépare ensuite les deux phases par décantation, on mesure leurs teneurs respectives en uranium, en plutonium et en produits de fission, et on calcule les coefficients de partage Dm de l'uranium, du plutonium et des produits de fission entre les deux phases. Ce coefficient de partage Dm correspond au rapport de la concentration de l'élément dans le solvant organique sur la concentration du même élément dans la solution aqueuse.

Les résultats obtenus sont donnés dans le tableau 2 qui suit.

Dans ce tableau, on a également indiqué les valeurs des constantes d'extraction Kex du plutonium et de l'uranium qui ont été calculées à partir des valeurs obtenues.

Au vu de ce tableau, on remarque que les coefficients de partage et les constantes d'extraction du plutonium sont beaucoup plus importants que ceux de l'uranium.

**Exemples 3 et 4.**

On suit le même mode opératoire que dans l'exemple 2 pour traiter la même solution aqueuse mais en utilisant comme solvant organique d'extraction 0,134 mol/l d'isomère cis-anti-cis du DCH18C6 dans le chloroforme pour l'exemple 3, et 0,134 mol/l du mélange d'isomères du DCH18C6 du commerce dans le chloroforme pour l'exemple 4.

Les résultats obtenus avec ces solvants organiques sont donnés également dans le tableau 2.

Au vu de ce tableau, on constate que l'utilisation de l'isomère cis-syn-cis permet d'atteindre des résultats supérieurs à ceux que l'on obtient avec l'isomère cis-anti-cis ou le mélange d'isomères.

**Exemple 5.**

Dans cet exemple, on utilise un solvant organique constitué par du dichloréthane contenant 0,134 mol/l de l'isomère cis-syn-cis du DCH18C6 pour séparer l'uranium du plutonium présent dans une solution aqueuse provenant d'une usine de retraitement de combustibles nucléaires irradiés, cette solution étant obtenue après le premier stade d'extraction et de séparation uranium-plutonium-produits de fission.

Dans cet exemple, comme représenté sur la figure 1, on réalise tout d'abord une première extraction en mettant en contact deux volumes (2V) du solvant organique d'extraction $O_0$ (isomère cis-syn-cis du DCH18C6 dans $C_2H_4Cl_2$) avec un volume (1V) de la solution aqueuse $A_0$ à traiter. On récupère ainsi une première solution aqueuse $A_1$ qui contient très peu de plutonium, de l'uranium et la majorité des produits de fission, et un solvant organique $O_1$ qui contient presque tout le plutonium, de l'uranium et très peu de produits de fission. On soumet ensuite ce solvant organique $O_1$ à 2 lavages par 2 fois son volume d'acide nitrique 3N. On récupère après ces lavages une troisième solution aqueuse $A_3$ qui contient de l'uranium, très peu de plutonium et des produits de fission et un deuxième solvant organique $O_2$ qui contient le plutonium, de l'uranium et très peu de produits de fission.

Après ce lavage, on réextrait l'uranium par de l'eau en mettant en contact le solvant organique $O_2$ avec 2 fois son volume d'eau. On obtient ainsi un troisième solvant organique $O_3$ qui contient très peu d'uranium et de produits de fission et beaucoup de plutonium et une solution aqueuse $A_5$ qui contient l'uranium et très peu de plutonium et de produits de fission.

On a traité de cette façon une solution aqueuse $A_0$ ayant la composition donnée dans le tableau 3 annexé, par un solvant organique $O_0$ constitué par du dichloréthane $CH_2Cl\text{-}CH_2Cl$ contenant 0,134 mol/l d'isomère cis-syn-cis du DCH18C6, en utilisant les rapports en volume donnés ci-dessus. Les résultats obtenus, exprimés sous la forme des teneurs en uranium, en plutonium et en produits de fission des solvants organiques $O_2$ et $O_3$ et de la solution aqueuse $A_5$ sont donnés dans le tableau 3.

Au vu de ce tableau, on constate que l'on a extrait quantitativement le plutonium puisque l'on obtient 99,8% du plutonium de départ dans le solvant organique $O_2$. Le lavage à l'acide nitrique permet d'éliminer les produits de fission. Lors du lavage à l'eau, c'est-à-dire de la réextraction, l'uranium (VI) est pratiquement réextrait en

totalité, tandis que le plutonium (IV) reste dans le solvant organique.

Le plutonium peut ainsi être séparé des produits de fission et de l'uranium sans cycle de valence et on peut le récupérer dans le solvant organique $O_3$ par réextraction dans une solution aqueuse d'un acide hydrophile ou dans une solution aqueuse d'un agent réducteur tel que le nitrate d'hydroxylamine.

**Exemple 6 et exemple comparatif 1.**

Dans ces exemples, on suit le même mode opératoire que dans l'exemple 5 pour traiter une solution aqueuse identique à celle de l'exemple 5, mais en utilisant comme solvant organique le mélange d'isomères du DCH18C6 à 25% (P/V) dans du chloroforme dans l'exemple 6 et du tributylphosphate (TBP) à 25% dans du dodécane dans l'exemple comparatif 1.

Les résultats obtenus dans ces conditions sont donnés également dans le tableau 3.

Au vu de ces résultats, on constate l'intérêt d'utiliser l'isomère cis-syn-cis du DCH18C6.

En effet, l'utilisation du TBP permet l'extraction de la plus grande partie du plutonium (92,5%) mais ni les lavages acides, ni le lavage aqueux ne permettent une séparation uranium-plutonium, et de ce fait le taux de récupération final du plutonium est relativement faible (52%) dans la phase aqueuse A5.

L'utilisation du mélange d'isomères du DCH18C6 dans le chloroforme permet une extraction plus complète du plutonium (98,4%), mais plusieurs lavages nitriques ne permettent pas la séparation plutonium-uranium et lors de l'extraction à l'eau, l'ensemble plutonium (98%) et uranium (61%) se retrouve dans la phase aqueuse A5.

En revanche, l'utilisation de l'isomère cis-syn-cis du DCH18C6 dans le dichloréthane permet une extraction complète (99,8%) du plutonium. Par ailleurs, les lavages nitriques et un lavage à l'eau conduisent à la séparation uranium-plutonium et permettent une importante décontamination. Le plutonium est ainsi récupéré sans uranium et sans utilisation de changement de valence dans la phase aqueuse A5.

**Exemples 7 à 9.**

Dans ces exemples, on compare également les résultats obtenus en utilisant comme solution organique $O_0$ du chloroforme contenant 0,67 mol/l de DCH18C6

- sous forme de l'isomère cis-syn-cis (ex.7)
- sous forme de l'isomère cis-anti-cis (ex.8)
- sous forme du mélange commercial d'isomères (ex.9).

Dans ces exemples, si l'on se réfère à la figure 1, on effectue successivement la première étape d'extraction de U et Pu par la solution organique $O_0$, puis l'étape de réextraction de l'uranium par une solution nitrique 1N ($A_4$) et l'étape de réextraction du plutonium par de l'eau ($A_6$) conformément à la première variante de mise en oeuvre du procédé de l'invention.

Dans ces différentes étapes, les rapports en volume A/O sont de

- 0,5 pour l'extraction,
- 1 pour la réextraction de l'uranium, et
- 2 pour la réextraction du plutonium.

Les résultats obtenus sur une solution aqueuse $A_0$ provenant du premier cycle de séparation U-Pu/produits de fission sont donnés dans le tableau 4 annexé.

Le procédé de l'invention permet ainsi de séparer le plutonium de l'uranium et des produits de fission plus efficacement et plus rapidement que les procédés actuellement utilisés. De plus, il ne nécessite pas de changement de valence pour assurer la séparation uranium - plutonium.

Par ailleurs, les éthers-couronnes utilisés dans l'invention résistent beaucoup mieux que le tributylphosphate à l'irradiation.

En effet, une solution de DCH18C6 contenant Pu(IV), U(VI) et des produits de fission correspondant à une activité de 80mGy/h, qui a été conservée pendant 8 mois, ce qui correspond à une énergie totale de 611kJ/mol avec une émission de 80,5kJ/mol, n'a présenté aucune dégradation du DCH18C6. Ceci signifie que le DCH18C6 peut résister à au moins 5000 extractions de solutions de haute activité.

Sur la figure 2, on a représenté de façon très schématique une installation pour mettre en oeuvre en continu le procédé de l'invention sur une solution aqueuse provenant du premier cycle de séparation U-Pu/produits de fission, réalisé par exemple au moyen de tributylphosphate.

Sur cette figure, on a repris les mêmes références que sur la figure 1 pour désigner les solutions aqueuses et organiques, introduites et sortant de l'installation, avec leurs volumes entre parenthèses.

Dans cette installation, qui comprend plusieurs étages dans lesquels les solutions circulent à contre-courant,

- le stade d'extraction du plutonium et de l'uranium comprend 5 étages,
- le stade de lavage par $HNO_3$ comprend 9 étages,
- le stade de réextraction de l'uranium comprend 3 étages, et
- le stade de réextraction du plutonium comprend 5 étages.

En utilisant une solution organique $O_0$ constituée de l'isomère cis-anti-cis du DCH18C6 à 10% (P/V) dans le benzonitrile, une solution $A_2$ de lavage des produits de fission constituée par 2 volumes de $HNO_3$ 7,2M et 2V de $HNO_3$ 1M issu de $A_4$, une solution de réextraction $A_4$ de l'uranium constituée par $HNO_3$ 1M et une solution $A_6$ de réextraction du Pu constituée par $H_2SO_4$ 0,5M, on peut obtenir en sortie d'installation une solution aqueuse $A_1$ contenant 99,96% de l'uranium de départ et moins de 0,003% du Pu de départ, et une solution aqueuse $A_7$ contenant plus de 99,997% du Pu de départ et moins de 0,03% de l'U de départ.

Le solvant organique $O_4$ est ensuite recyclé au stade d'extraction après un traitement de purification approprié, par exemple par lavage au moyen de $H_2SO_4$ à 3 mol/l.

**TABLEAU 1**

**COMPOSITIONS DES SOLUTIONS AQUEUSES A0, A1, A3, A5, et A7.**

| | $A_0$ | $A_1$ | $A_3$ | $A_5$ | $A_7$ |
|---|---|---|---|---|---|
| U | 980mg/l (100%) | 144mg/l 14,7%) | 336,14mg/l 34,3% | 472,36mg/l 48,2% | 22,34mg/l 2,28% |
| Pu | 1319mg/l (100%) | 0,48mg/l 0,37%) | 8,44mg/l 0,64%) | 67,66mg/l (5,13%) | 1239,86mg/l (94%) |
| PF | 1,27mCi/l (100%) | 0,87mCi/l (69%) | 0,26mCi/l 20,6%) | 0,06mCi/l 4,9%) | 0,07mCi/l 5,6%) |

## TABLEAU 2

| | $D_m(Pu)$ | $D_m(U)$ | $D_m(PF)$ | $K_{Pu}$ $mol^{-6}l^{6}$ | $K_U$ $mol^{-3}l^{3}$ |
|---|---|---|---|---|---|
| Ex. 2<br>0,134 mol/l cis-syn-cis dans $CHCl_3$ | 51 | 1,9 | 0,022 | 477 | 6,4 |
| Ex. 3<br>0,134 mol/l de cis-anti-cis dans $CHCl_3$ | 20 | 1,5 | 0,012 | 140 | 4,0 |
| Ex. 4<br>0,134 mol/l DCH 18C6 du commerce dans $CHCl_3$ | 23 | 1,6 | 0,014 | 250 | 4,0 |

## TABLEAU 3

| | Ex. | Solution organique $O_0$ | U mg/l | U (%)1) | Pu mg/l | Pu (%)1) | PF mCi/l | PF (%) |
|---|---|---|---|---|---|---|---|---|
| $A_0$ | 5<br>6<br>comp. 1 | cis-syn-cis/$C_2H_4Cl_2$<br>DCH18C6/$CHCl_3$<br>TBP/$C_{12}H_{26}$ | 1236 | (100) | 2400 | (100) | 4,51 | (100) |
| $O_2$ | 5<br>6<br>comp. 1 | cis-syn-cis/$C_2H_4Cl_2$<br>DCH18C6/$CHCl_3$<br>TBP/$C_{12}H_{26}$ | 697,1<br>750,2<br>1181,6 | (56,4)<br>(60,7)<br>(95,6) | 2395<br>2361<br>2220 | (99,8)<br>(98,4)<br>92,5) | 0,428<br>0,10<br>0,78 | (9,5)<br>(2,3)<br>(17,5) |
| $O_3$ | 5<br>6<br>comp. 1 | cis-syn-cis/$C_2H_4Cl_2$<br>DCH18C6/$CHCl_3$<br>TBP/$C_{12}H_{26}$ | 12,36<br>12,36<br>716,9 | (1)<br>(1)<br>(58) | 2304<br>0,24<br>984 | (98)<br>(0,01)<br>(41) | 0,008<br>0,005<br>0,22 | (0,18)<br>(0,11)<br>(5,0) |
| $A_5$ | 5<br>6<br>comp. 1 | cis-syn-cis/$C_2H_4Cl_2$<br>DCH18C6/$CHCl_3$<br>TBP/$C_{12}H_{26}$ | 352,26<br>753,96<br>469,68 | (28,5)<br>(61)<br>(38) | 100,8<br>2352<br>1248 | (4,2)<br>(96)<br>(52) | 0,005<br>0,094<br>0,56 | (0,11)<br>(2,1)<br>(12,5) |

1) Teneur exprimée en % de la teneur dans la solution initiale $A_0$.

**TABLEAU 4**

| Ex. | Solution organique DCH18C6 0,67mol/l dans $CHCl_3$ | Solutions aqueuses (teneurs en % de la quantité initiale) A1 | A5 | A7 |
|---|---|---|---|---|
| Ex.7 | isomère cis-syn-cis | Pu 2%<br>U 35%<br>PF* 98% | Pu 6%<br>U 31%<br>PF* 1% | Pu 92%<br>U 34%<br>PF* 0,2% |
| Ex.8 | isomère cis-anti-cis | Pu 4,6%<br>U 40%<br>PF* 98% | Pu 18%<br>U 40%<br>PF* 1% | Pu 80%<br>U 20%<br>PF* 0,2% |
| Ex.9 | mélange d'isomères | Pu 4,2%<br>U 40%<br>PF* 98% | Pu 10%<br>U 40%<br>PF* 1% | Pu 85%<br>U 17%<br>PF* 0,2% |

* Produits de fission.

## Revendications

1. Procédé pour séparer le plutonium (IV) de l'uranium et des produits de fission présents dans une solution

aqueuse $A_0$ obtenue lors du retraitement des éléments combustibles nucléaires irradiés et contenant pratiquement la totalité du plutonium provenant de ces éléments, caractérisé en ce qu'il comprend les étapes successives suivantes :

1°) mise en contact de cette solution aqueuse $A_0$ avec une solution organique $O_0$ comprenant au moins un éther-couronne de façon à obtenir une solution organique $O_1$ contenant de l'uranium et du plutonium et une solution aqueuse $A_1$ contenant les produits de fission ,

2°) réextraction de l'uranium extrait dans la solution organique $O_1$ par mise en contact de cette solution $O_1$ avec une solution aqueuse $A_4$ constituée par de l'eau ou par une solution aqueuse nitrique, de façon à obtenir une solution aqueuse $A_0$ contenant l'uranium et une solution organique $O_3$ contenant du plutonium, et

3°) récupération du plutonium présent dans la solution organique $O_3$ par mise en contact de cette solution avec une solution aqueuse $A_6$ d'un acide hydrophile.

**2.** Procédé selon la revendication 1, caractérisé en ce que l'acide hydrophile est choisi parmi $H_2SO_4$, $H_3PO_4$, HCl et HF.

**3.** Procédé selon la revendication 2, caractérisé en ce que la solution $A_6$ est une solution aqueuse contenant 0,05 à 2 mol/l d'acide sulfurique.

**4.** Procédé pour séparer le plutonium (IV) de l'uranium et des produits de fission présents dans une solution aqueuse $A_0$, obtenue lors du retraitement d'éléments combustibles nucléaires irradiés et contenant pratiquement la totalité du plutonium provenant de ces éléments, caractérisé en ce qu'il comprend les étapes successives suivantes :

1°) mise en contact de cette solution aqueuse $A_0$ avec une solution organique $O_0$ comprenant au moins un éther-couronne et un diluant chloré de façon à obtenir une solution organique $O_1$ contenant de l'uranium et du plutonium et une solution aqueuse $A_1$ contenant des produits de fission,

2°) réextraction de l'uranium extrait dans la solution organique $O_1$ par mise en contact de cette solution avec une solution aqueuse $A_4$ constituée par une solution aqueuse nitrique, de façon à obtenir une solution aqueuse $A_5$ contenant l'uranium et une solution organique 03 contenant le plutonium, et

3°) récupération du plutonium présent dans la solution organique $O_3$ par mise en contact de la solution diluée obtenue avec une solution aqueuse $A_6$ constituée par de l'eau ou une solution aqueuse de faible acidité.

**5.** Procédé pour séparer le plutonium (IV) de l'uranium et des produits de fission présents dans une solution aqueuse $A_0$, obtenue lors du retraitement d'éléments combustibles nucléaires irradiés et contenant pratiquement la totalité du plutonium provenant de ces éléments, caractérisé en ce qu'il comprend les étapes successives suivantes :

1°) mise en contact de cette solution aqueuse $A_0$ avec une solution organique $O_0$ comprenant au moins un éther-couronne de façon à obtenir une solution organique $O_1$ contenant de l'uranium et du plutonium et une solution aqueuse $A_1$ contenant des produits de fission,

2°) réextraction de l'uranium extrait dans la solution organique $O_1$ par mise en contact de cette solution avec une solution aqueuse $A_4$ constituée par de l'eau ou par une solution aqueuse nitrique, de façon à obtenir une solution aqueuse $A_0$ contenant l'uranium et une solution organique $O_3$ contenant le plutonium, et

3°) récupération du plutonium présent dans la solution organique $O_3$ par dilution de cette solution $O_3$ au moyen d'un solvant et mise en contact de la solution diluée obtenue avec une solution aqueuse $A_0$ constituée par de l'eau ou une solution aqueuse de faible acidité.

**6.** Procédé pour séparer le plutonium (IV) de l'uranium et des produits de fission présents dans une solution aqueuse $A_0$ obtenue lors du retraitement des éléments combustibles nucléaires irradiés et contenant pratiquement la totalité du plutonium provenant de ces éléments, caractérisé en ce qu'il comprend les étapes successives suivantes :

1°) mise en contact de cette solution aqueuse $A_0$ avec une solution organique $O_0$ comprenant au moins un éther-couronne de façon à obtenir une solution organique $O_1$ contenant de l'uranium et du plutonium et une solution aqueuse $A_1$ contenant les produits de fission,

2°) réextraction de l'uranium extrait dans la solution organique $O_1$ par mise en contact de cette solution $O_1$ avec une solution aqueuse $A_4$ constituée par de l'eau ou par une solution aqueuse nitrique, de façon à obtenir une solution aqueuse $A_0$ contenant l'uranium et une solution organique $O_3$ contenant du plu-

tonium, et

3°) récupération du plutonium présent dans la solution organique $O_3$ par mise en contact de cette solution avec une solution aqueuse $A_6$ d'un agent réducteur.

7. Procédé selon l'une quelconque des revendications 1 à 6, caractérisé en ce que l'on utilise pour la réextraction de l'uranium une solution aqueuse ayant une concentration en acide nitrique inférieure à 3 mol/l.

8. Procédé selon l'une quelconque des revendications 1 à 7, caractérisé en ce que l'éther-couronne répond aux formules :

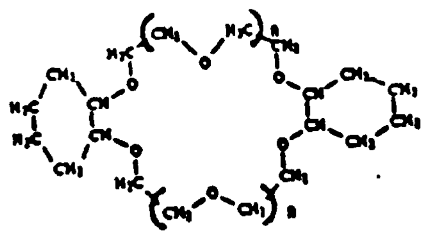

(I)

ou

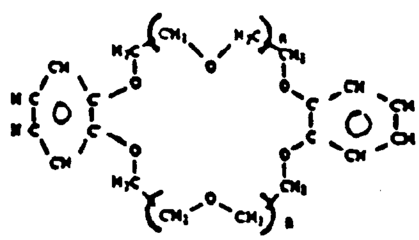

(II)

dans lesquelles n est égal à 0 ou est un nombre entier allant de 1 à 4.

9. Procédé selon la revendication 8, caractérisé en ce que l'éther-couronne répond à la formule (I) avec n = 1.

10. Procédé selon la revendication 9, caractérisé en ce que l'éther-couronne est l'isomère cis-syn-cis de l'éther-couronne de formule (I) dans laquelle n = 1.

11. Procédé selon la revendication 9, caractérisé en ce que l'éther-couronne est l'isomère cis-anti-cis de l'éther-couronne de formule (I) dans laquelle n = 1.

12. Procédé selon l'une quelconque des revendications 1 à 3 et 5 à 11, caractérisé en ce que la solution organique $O_0$ comprend un diluant constitué par du benzonitrile.

13. Procédé selon l'une quelconque des revendications 1 à 12, caractérisé en ce que la concentration en éther-couronne de la solution organique $O_0$ est de 0,5 à 40% en poids/volume.

14. Procédé selon l'une quelconque des revendications 1 à 13, caractérisé en ce que l'on réalise au moins une étape supplémentaire de lavage de la solution organique $O_1$ par une solution aqueuse $A_2$ d'acide nitrique avant de procéder à la deuxième étape de réextraction de l'uranium par la solution aqueuse $A_4$.

15. Procédé selon la revendication 14, caractérisé en ce que la solution de lavage $A_2$ est une solution d'acide nitrique 2 à 5N.

16. Procédé selon l'une quelconque des revendications 1 à 15, caractérisé en ce que l'on réalise les mises en contact des solutions organiques avec les solutions aqueuses dans des colonnes d'échanges.

17. Procédé selon la revendication 14, caractérisé en ce que l'on opère en continu, en ce que dans chaque étape du procédé, on met en contact la solution aqueuse ($A_0$, $A_2$, $A_4$ ou $A_0$) avec la solution organique correspondante ($O_0$, $O_2$, $O_4$ ou $O_6$) en faisant circuler les deux solutions à contre-courant, et en ce que l'on recycle la solution aqueuse $A_3$ obtenue après l'étape de lavage avec la solution aqueuse $A_0$ à traiter.

18. Procédé selon la revendication 17, caractérisé en ce que l'on recycle la solution aqueuse $A_5$ obtenue après l'étape de réextraction de l'uranium pour l'utiliser dans l'étape de lavage avec la solution aqueuse $A_2$.

**Patentansprüche**

1. Verfahren zum Trennen von Plutonium (IV) von Uran und Spaltprodukten, die in einer wäßrigen Lösung $A_0$ vorhanden sind, welche bei der Wiederaufarbeitung von bestrahlten nuklearen Brennelementen erhalten wird und praktisch das gesamte Plutonium aus diesen Elementen enthält, **dadurch gekennzeich-**

**net,** daß es die folgenden aufeinanderfolgenden Schritte umfaßt:

1) Zusammenbringen dieser wäßrigen Lösung $A_0$ mit einer organischen Lösung $O_0$, welche mindestens einen Kronenether enthält, so daß eine organische Lösung $O_1$, welche Uran und Plutonium enthält, und eine wäßrige Lösung $A_1$, welche die Spaltprodukte enthält, erhalten wird,

2) Rückextraktion des in die organische Lösung $O_1$ extrahierten Urans durch Zusammenbringen dieser Lösung $O_1$ mit einer wäßrigen Lösung $A_4$, die aus Wasser oder einer Salpetersäure-haltigen wäßrigen Lösung besteht, so daß eine wäßrige Lösung $A_5$, welche das Uran enthält, und eine organische Lösung $O_3$, welche Plutonium enthält, erhalten wird, und

3) Rückgewinnung des in der organischen Lösung $O_3$ vorhandenen Plutoniums durch Zusammenbringen dieser Lösung mit einer wäßrigen Lösung $A_0$ einer hydrophilen Säure.

2. Verfahren nach Anspruch 1, **dadurch gekennzeichnet,** daß die hydrophile Säure ausgewählt wird aus $H_2SO_4$, $H_3PO_4$, HCl und HF.

3. Verfahren nach Anspruch 2, **dadurch gekennzeichnet,** daß die Lösung $A_6$ eine wäßrige Lösung ist, die 0,05 bis 2 Mol/l Schwefelsäure enthält.

4. Verfahren zum Trennen von Plutonium (IV) von Uran und Spaltprodukten, die in einer wäßrigen Lösung $A_0$ vorhanden sind, welche bei der Wiederaufarbeitung von bestrahlten nuklearen Brennelementen erhalten wird und praktisch das gesamte Plutonium aus diesen Elementen enthält, **dadurch gekennzeichnet,** daß es die folgenden aufeinanderfolgenden Schritte umfaßt:

1) Zusammenbringen dieser wäßrigen Lösung $A_0$ mit einer organischen Lösung $O_0$, welche mindestens einen Kronenether und ein chloriertes Verdünnungsmittel umfaßt, so daß eine organische Lösung $O_1$, welche Uran und Plutonium enthält, und eine wäßrige Lösung $A_1$, welche Spaltprodukte enthält, erhalten wird,

2) Rückextraktion des in die organische Lösung $O_1$ extrahierten Urans durch Zusammenbringen dieser Lösung mit einer wäßrigen Lösung $A_4$, die aus einer Salpetersäure-haltigen wäßrigen Lösung besteht, so daß eine wäßrige Lösung $A_5$, welche das Uran enthält, und eine organische Lösung $O_3$, welche das Plutonium enthält, erhalten wird, und

3) Rückgewinnung des in der organischen Lösung $O_3$ vorhandenen Plutoniums durch Zusammenbringen der erhaltenen verdünnten Lösung mit einer wäßrigen Lösung $A_6$, die aus Wasser oder einer wäßrigen Lösung mit geringer Acidität besteht.

5. Verfahren zum Trennen von Plutonium (IV) von Uran und Spaltprodukten, die in einer wäßrigen Lösung $A_0$ vorhanden sind, welche bei der Wiederaufarbeitung von bestrahlten nuklearen Brennelementen erhalten wird und praktisch das gesamte Plutonium aus diesen Elementen enthält, **dadurch gekennzeichnet,** daß es die folgenden aufeinanderfolgenden Schritte umfaßt:

1) Zusammenbringen dieser wäßrigen Lösung $A_0$ mit einer organischen Lösung $O_0$, welche mindestens einen Kronenether umfaßt, so daß eine organische Lösung $O_1$, welche Uran und Plutonium enthält, und eine wäßrige Lösung $A_1$, welche Spaltprodukte enthält, erhalten wird,

2) Rückextraktion des in die organische Lösung $O_1$ extrahierten Urans durch Zusammenbringen dieser Lösung mit einer wäßrigen Lösung $A_4$, die aus Wasser oder einer Salpetersäure-haltigen wäßrigen Lösung besteht, so daß eine wäßrige Lösung $A_5$, welche das Uran enthält, und eine organische Lösung $O_3$, welche das Plutonium enthält, erhalten wird, und

3) Rückgewinnung des in der organischen Lösung $O_3$ vorhandenen Plutoniums durch Verdünnung dieser Lösung $O_3$ mit einem Lösungsmittel und Zusammenbringen der erhaltenen verdünnten Lösung mit einer wäßrigen Lösung $A_6$, die aus Wasser oder einer wäßrigen Lösung mit geringer Acidität besteht.

6. Verfahren zum Trennen von Plutonium (IV) von Uran und Spaltprodukten, die in einer wäßrigen Lösung $A_0$ vorhanden sind, welche bei der Wiederaufarbeitung von bestrahlten nuklearen Brennelementen erhalten wird und praktisch das gesamte Plutonium aus diesen Elementen enthält, **dadurch gekennzeichnet,** daß es die folgenden aufeinanderfolgenden Schritte umfaßt:

1) Zusammenbringen dieser wäßrigen Lösung $A_0$ mit einer organischen Lösung $O_0$, welche mindestens einen Kronenether umfaßt, so daß eine organische Lösung $O_1$, welche Uran und Plutonium enthält, und eine wäßrige Lösung $A_1$, welche die Spaltprodukte enthält, erhalten wird,

2) Rückextraktion des in die organische Lösung $O_1$ extrahierten Urans durch Zusammenbringen dieser Lösung $O_1$ mit einer wäßrigen Lösung $A_4$, die aus Wasser oder einer Salpetersäure-haltigen wäßrigen Lösung besteht, so daß eine wäßrige Lösung $A_5$, welche das Uran enthält, und eine organische Lösung

$O_3$, welche Plutonium enthält, erhalten wird, und
3) Rückgewinnung des in der organischen Lösung 03 vorhandenen Plutoniums durch Zusammenbringen dieser Lösung mit einer wäßrigen Lösung $A_6$ eines Reduktionsmittels.

7. Verfahren nach einem der Ansprüche 1 bis 6, **dadurch gekennzeichnet,** daß zur Rückextraktion des Urans eine wäßrige Lösung mit einer Konzentration an Salpetersäure unterhalb von 3 Mol/l verwendet wird.

8. Verfahren nach einem der Ansprüche 1 bis 7, **dadurch gekennzeichnet,** daß der Kronenether den Formeln entspricht:

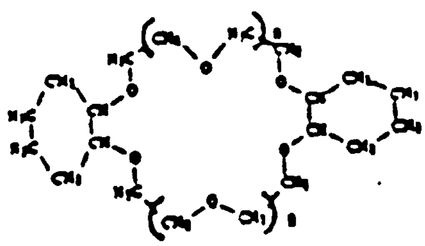
(I) oder
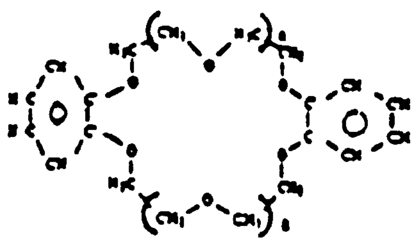
(II)

in welchen n 0 oder eine ganze Zahl von 1 bis 4 ist.

9. Verfahren nach Anspruch 8, **dadurch gekennzeichnet,** daß der Kronenether der Formel (I) mit n = 1 entspricht.

10. Verfahren nach Anspruch 9, **dadurch gekennzeichnet,** daß der Kronenether das cis-syn-cis-Isomere des Kronenethers der Formel (I) ist, in welcher n = 1.

11. Verfahren nach Anspruch 9, **dadurch gekennzeichnet,** daß der Kronenether das cis-anti-cis-Isomere des Kronenethers der Formel (I) ist, in welcher n = 1.

12. Verfahren nach einem der Ansprüche 1 bis 3 und 5 bis 11, **dadurch gekennzeichnet,** daß die organische Lösung $O_0$ ein Verdünnungsmittel umfaßt, das aus Benzonitril besteht.

13. Verfahren nach einem der Ansprüche 1 bis 12, **dadurch gekennzeichnet,** daß die Konzentration des Kronenethers der organischen Lösung $O_0$ 0,5 bis 40% Gew./Vol. beträgt.

14. Verfahren nach einem der Ansprüche 1 bis 13, **dadurch gekennzeichnet,** daß mindestens ein zusätzlicher Waschschritt der organischen Lösung $O_1$ durch eine wäßrige Salpetersäurelösung $A_2$ durchgeführt wird, bevor der zweite Schritt der Rückextraktion des Urans durch die wäßrige Lösung $A_4$ erfolgt.

15. Verfahren nach Anspruch 14, **dadurch gekennzeichnet,** daß die Waschlösung $A_2$ eine 2 bis 5 N Salpetersäurelösung ist.

16. Verfahren nach einem der Ansprüche 1 bis 15, **dadurch gekennzeichnet,** daß das Zusammenbringen der organischen Lösungen mit den wäßrigen Lösungen in Austauscherkolonnen durchgeführt wird.

17. Verfahren nach Anspruch 14, **dadurch gekennzeichnet,** daß es sich um einen kontinuierlichen Betrieb handelt, daß in jedem Schritt des Verfahrens die wäßrige Lösung ($A_6$, $A_2$, $A_4$ oder $A_6$) mit der entsprechenden organischen Lösung ($O_0$, $O_2$, $O_4$ oder $O_6$) zusammengebracht wird, indem die beiden Lösungen im Gegenstrom geführt werden, und daß die nach dem Waschschritt erhaltene wäßrige Lösung $A_3$ zu der zu behandelnden wäßrigen Lösung $A_6$ zurückgeführt wird.

18. Verfahren nach Anspruch 17, **dadurch gekennzeichnet,** daß die nach dem Schritt der Rückextraktion des Urans erhaltene wäßrige Lösung $A_6$ zurückgeführt wird, um sie in dem Waschschritt mit der wäßrigen Lösung $A_2$ zu verwenden.

## Claims

1. Method to separate plutonium (IV) from uranium and fission products present in an aqueous solution $A_0$ obtained when reprocessing irradiated nuclear fuel elements and containing almost all the plutonium derived from these elements, characterized in that it includes the following successive stages:
   1) the placing of this aqueous solution $A_0$ in contact with an organic solution $O_0$ including at least one crown compound so as to obtain an organic solution $O_1$ containing uranium and plutonium, and an aqueous solution $A_1$ containing fission products,
   2) re-extraction of the uranium extracted from the organic solution $O_1$ by placing this solution $O_1$ in contact with an aqueous solution $A_4$ constituted by water or a nitric aqueous solution so as to obtain an aqueous solution $A_0$ containing uranium and an organic solution $O_5$ containing plutonium, and
   3) recovering the plutonium present in the organic solution $O_3$ by placing this solution in contact with an aqueous solution $A_6$ of a hydrophilic acid.

2. Method according to claim 1, characterized in that the hydrophilic acid is either $H_2SO_4$, $H_3PO_4$, HCl or HF.

3. Method according to claim 2, characterized in that the solution $A_6$ is an aqueous solution containing 0.05 to 2mols/1 of sulphuric acid.

4. Method to separate the plutonium (IV) from the uranium and fission products present in an aqueous solution $A_0$ obtained when reprocessing irradiated nuclear fuel elements and containing almost all the plutonium derived from these elements, characterized in that it includes the following successive stages:
   1) the placing of this aqueous solution $A_0$ in contact with an organic solution $O_0$ including at least one crown compound and one chlorated diluting agent so as to obtain an organic solution $O_1$ containing uranium and plutonium, and an aqueous solution $A_1$ containing fission products,
   2) re-extraction of the uranium extracted from the organic solution $O_1$ by placing this solution in contact with an aqueous solution $A_4$ constituted by a nitric aqueous solution so as to obtain an aqueous solution $A_0$ containing uranium, and an organic solution $O_3$ containing plutonium, and
   3) recovering the plutonium present in the organic solution $O_3$ by placing the diluted solution obtained in contact with an aqueous solution $A_6$ constituted by water or a low-acidity aqueous solution.

5. Method to separate the plutonium (IV) from the uranium and the fission products present in an aqueous solution $A_0$ obtained when reprocessing irradiated nuclear fuel elements and obtained ing almost all the plutonium originating from these elements, characterized in that it includes the following successive stages:
   1) the placing of this aqueous solution $A_0$ in contact with an organic solution $O_0$ including at least one crown compound so as to obtain an organic solution $O_1$ containing uranium and plutonium and an aqueous solution $A_1$ containing fission products,
   2) re-extraction of the uranium extracted from the organic solution $O_1$ by placing this solution in contact with an aqueous solution $A_4$ constituted by water or a nitric aqueous solution so as to obtain an aqueous solution $A_5$ containing uranium and an organic solution $O_3$ containing plutonium, and
   3) recovery of the plutonium present in the organic solution $O_3$ by diluting this solution $O_3$ by a solvent and by placing this diluted solution in contact with an aqueous solution $A_6$ constituted by water or a low-acidity aqueous solution.

6. Method to separate the plutonium (IV) from the uranium and fission products present in an aqueous solution $A_0$ obtained when reprocessing irradiated nuclear fuel elements and containing almost all the plutonium derived from these elements, characterized in that it includes the following successive stages:
   1) the placing of this aqueous solution $A_0$ in contact with an organic solution $O_0$ including at least one crown compound so as to obtain an organic solution $O_1$ containing uranium and plutonium, and an aqueous solution A containing the fission products,
   2) re-extraction of the uranium extracted from the organic solution $O_1$ by placing this solution $O_1$ in contact with an aqueous solution $A_4$ constituted by water or by a nitric aqueous solution so as to obtain an aqueous solution $A_5$ containing the uranium and an organic solution $O_3$ containing the plutonium, and
   3) recovery of the plutonium present in the organic solution $O_3$ by placing this solution in contact with an aqueous solution $A_6$ of a reducing agent.

7. Method according to any one of the claims 1 to 6, characterized in that for re-extraction of the uranium, an aqueous solution is used having a nitric acid concentration of less than 3 mols/l.

8. Method according to any one of the claims 1 to 7, characterized in that the crown compound satisfies the formulae:

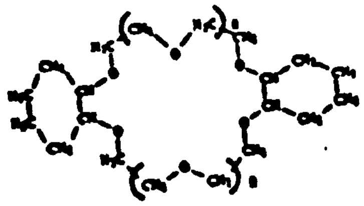 (I) or 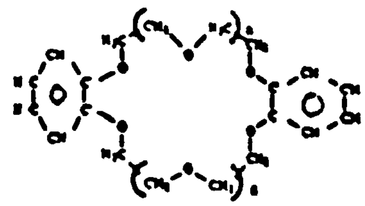 (II)

in which n is equal to 0 or is a whole number ranging from 1 to 4.

9. Method according to claim 8, characterized in that the crown compound satisfies the formula (I) with n=1.

10. Method according to claim 9, characterized in that the crown compound is the cis-syn-cis isomer of the crown compound of formula (I) in which n=1.

11. Method according to claim 9, characterized in that the crown compound is the cis-anti-cis isomer of the crown compound of formula (I) in which n=1.

12. Method according to any one of claims 1 to 3 and 5 to 11, characterized in that the organic solution $O_0$ includes a diluting agent constituted by benzonitrile.

13. Method according to any one of claims 1 to 12, characterized in that the crown compound concentration of the organic solution $O_0$ is 0.5 at 40% in weight/volume.

14. Method according to any one of claims 1 to 13, characterized in that at least one additional stage is effected for washing the organic solution $O_1$ by an aqueous solution $A_2$ with nitric acid before proceeding to the second stage for the uranium being re-extracted by the aqueous solution $A_4$.

15. Method according to claim 14, characterized in that the washing solution $A_2$ is a 2 to 5N nitric acid solution.

16. Method according to any one of claims 1 to 15, characterized in that the contacting of the organic solutions with the aqueous solutions are effected in exchange columns.

17. Method according to claim 14, characterized in that operation takes place continuously, wherein in each stage of the method the aqueous solution ($A_0$, $A_2$, $A_4$ or $A_6$) is placed in contact with the corresponding organic solution ($O_0$, $O_2$, $O_4$ or $O_6$) by making the two solutions circulate counter-flow, and that the aqueous solution $A_3$ obtained is recycled after the stage for washing with the aqueous solution $A_0$ to be processed.

18. Method according to claim 17, characterized in that the aqueous solution $A_5$ obtained after the uranium re-extraction stage is recycled so as to use it in the stage for washing with the aqueous solution $A_2$.

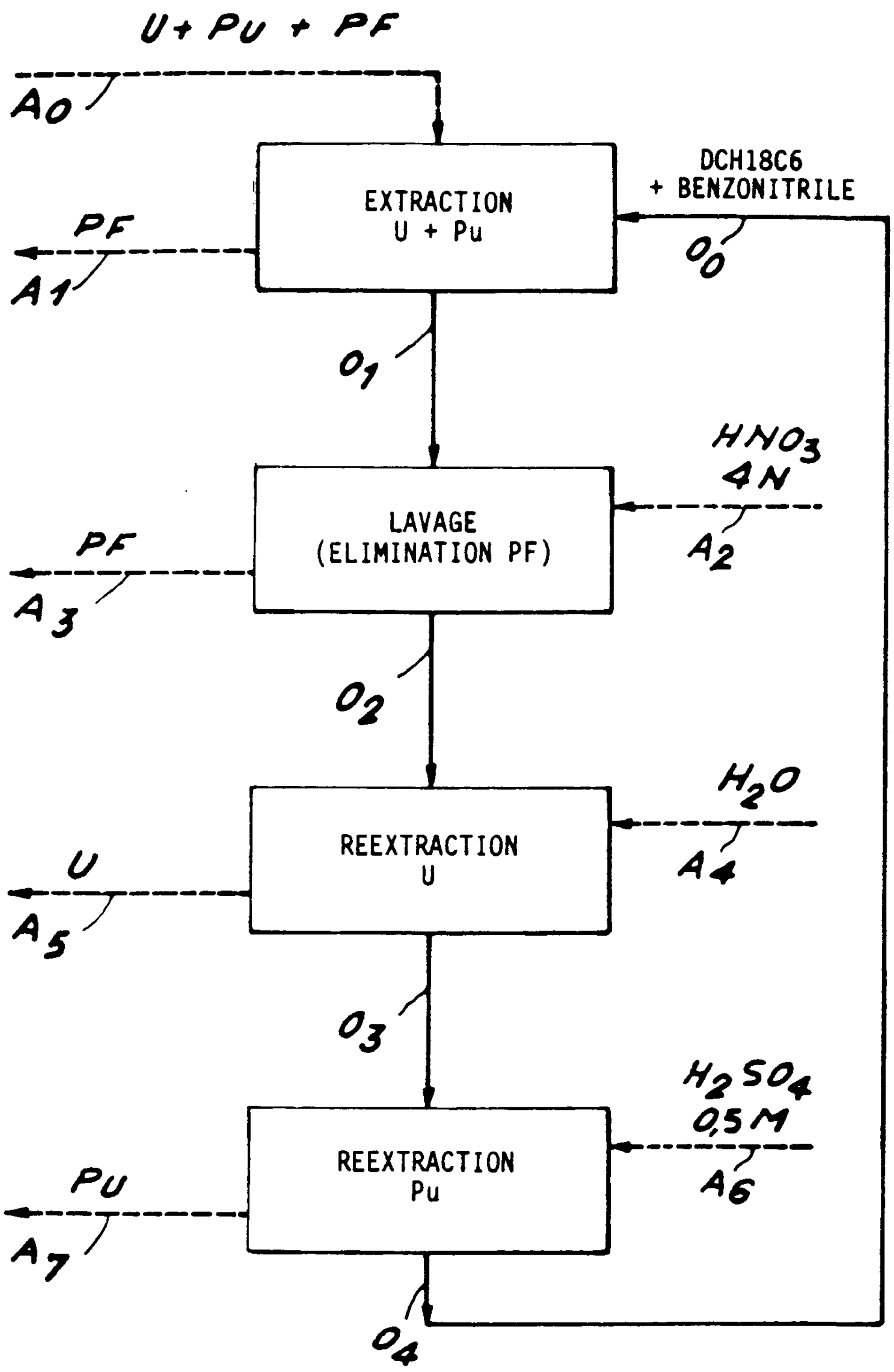
U + Pu + PF
A0
EXTRACTION
U + Pu
DCH18C6
+ BENZONITRILE
O0
PF
A1
O1
HNO3
4N
LAVAGE
(ELIMINATION PF)
A2
PF
A3
O2
H2O
REEXTRACTION
U
A4
U
A5
O3
H2SO4
0,5 M
REEXTRACTION
Pu
A6
Pu
A7
O4

FIG. 1

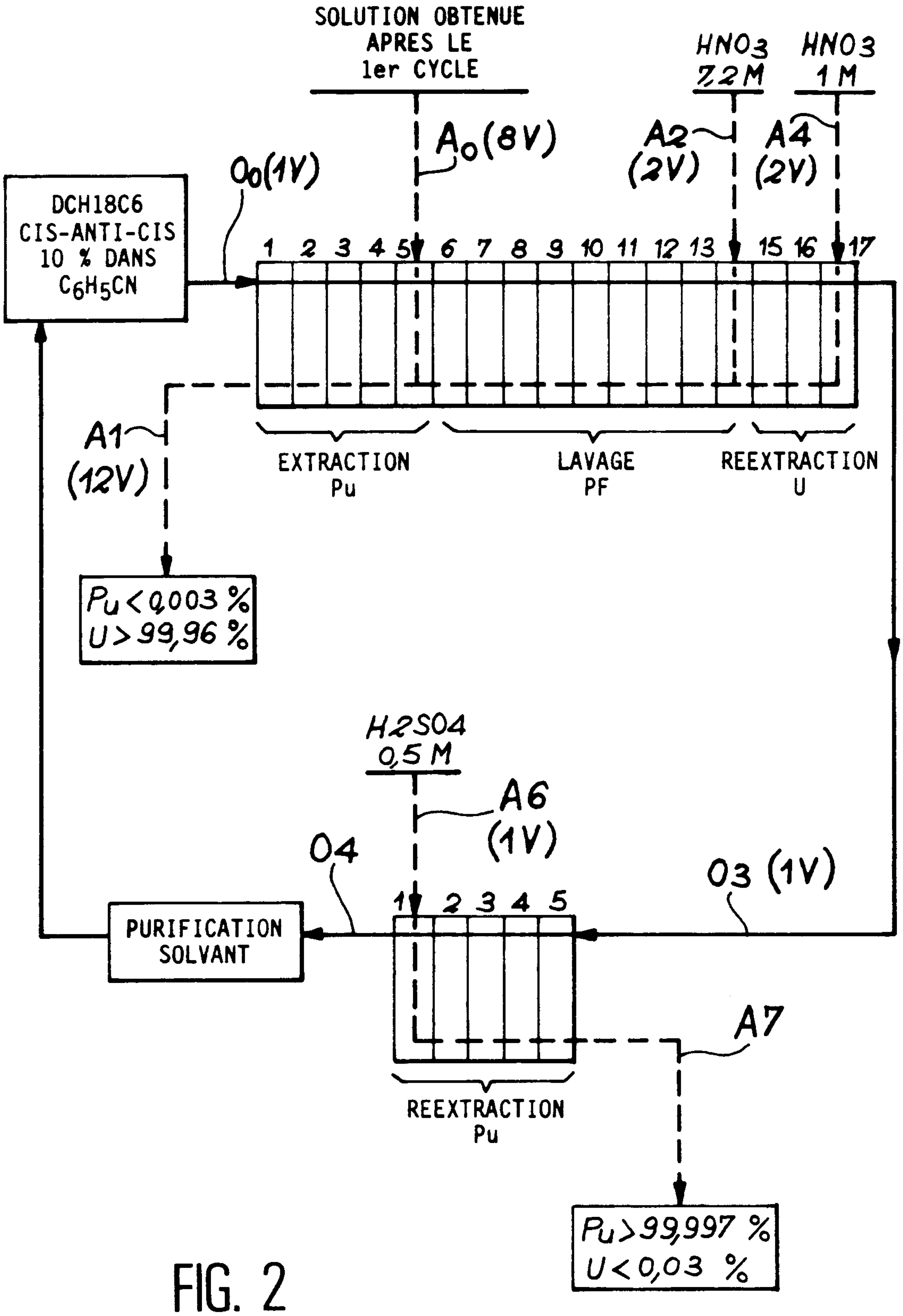
SOLUTION OBTENUE
APRES LE
1er CYCLE
HNO3
7,2 M
HNO3
1 M
A0 (8V)
A2
(2V)
A4
(2V)
O0(1V)
DCH18C6
CIS-ANTI-CIS
10 % DANS
C6H5CN
1 2 3 4 5 6 7 8 9 10 11 12 13 15 16 17
A1
(12V)
EXTRACTION
Pu
LAVAGE
PF
REEXTRACTION
U
Pu < 0,003 %
U > 99,96 %
H2SO4
0,5 M
A6
(1V)
O4
O3 (1V)
PURIFICATION
SOLVANT
1 2 3 4 5
A7
REEXTRACTION
Pu
Pu > 99,997 %
U < 0,03 %

FIG. 2